# EUROPEAN PATENT SPECIFICATION

(11) **EP 3 236 514 B1**
(45) Date of publication and mention of the grant of the patent: **18.03.2020**
(21) Application number: 17164886.8
(22) Date of filing: 05.04.2017
(51) Int. Cl.: H01M 4/02, H01M 4/14, H01M 4/62, H01M 10/06, H01M 10/08, H01M 4/73, H01M 4/74

(54) **LEAD-ACID BATTERY**
BLEIBATTERIE
BATTERIE D'ACIDE DE PLOMB

(30) Priority: 21.04.2016 JP 2016084938
(43) Date of publication of application: 25.10.2017
(73) Proprietor: GS Yuasa International Ltd., Kisshoin, Minami-ku, Kyoto-shi, Kyoto 601-8520 (JP)
(72) Inventor: SATO, Katsuyuki, Kyoto, 601-8520 (JP); KYO, Masaaki, Kyoto, 601-8520 (JP); INAGAKI, Satoshi, Kyoto, 601-8520 (JP)
(74) Representative: Isarpatent

(56) References cited:
- WO-A1-2016/031772
- JP-A- 2012 079 431
- JP-A- 2015 005 528
- JP-A- 2015 032 482
- JP-A- 2015 191 691
- JP-B2- 5 712 927
- US-A1- 2012 248 383

## Description

### BACKGROUND

With the advent of idling-stop vehicles, lead-acid batteries have been deeply discharged more often than before. For example, lead-acid batteries for idling-stop vehicles are assumed to be used in a partial state of charge (PSOC). Lead-acid batteries for cycle applications, such as forklift applications, have been used at a deep depth of discharge (DOD) heretofore. When used in a partial state of charge, a lead-acid battery has a reduced lifetime due to accumulation of lead sulfate in a positive electrode or sulfation of a negative electrode. In a partial state of charge, stirring of an electrolyte solution by gas generation is insufficient, and therefore the electrolyte solution is easily stratified, so that the lifetime of a lead-acid battery is further reduced.

If a lead-acid battery falls into overdischarge from a partial state of charge as a result of, for example, leaving a vehicle unattended for a long time, permeation short circuit easily occurs in which metallic lead penetrates through a separator, leading to short circuit between positive and negative electrode plates. Due to the overdischarge, the concentration of sulfate ions in an electrolyte solution decreases, and accordingly, the concentration of lead ions in the electrolyte solution increases. The lead ions are reduced at the negative electrode plate during charge, and dendrites of metallic lead grow through pores in the separator, and penetrate through the separator, leading to short circuit between the positive electrode plate and the negative electrode plate.

It has been known heretofore that graphite is contained in a negative electrode material for a lead-acid battery. For example, JP 2013-41848 discloses "a lead-acid battery comprising a battery container which houses an electrolyte solution, and an electrode plate group in which a negative electrode plate formed by packing a negative active material in a negative electrode current collector and a positive electrode plate formed by packing a positive active material in a positive electrode current collector are layered with a separator interposed therebetween, wherein the negative active material contains scaly graphite, and a formaldehyde condensate of sodium bisphenol A aminobenzenesulfonate represented by the chemical structural formula of [Chemical Formula 1], the molecular weight of the formaldehyde condensate of sodium bisphenol A aminobenzenesulfonate is 15,000 to 20,000, the content of sulfur in the compound is 6 to 10% by mass, and the mean primary particle size of the scaly graphite is 100 µm or more and 220 µm or less". JP 5584216 B discloses "a shrink-proofing agent for a storage battery paste for a storage battery negative electrode plate for a lead-acid battery, the shrink-proofing agent including: barium sulfate; a mixture of carbon and graphite with a concentration of 1% to 5% based on an oxide used in the storage battery paste; and lignosulfonate, wherein the mixture of carbon and graphite contains 1% to 3% of graphite based on the amount of the oxide used in the storage battery paste".

Graphite particles provide a passage for electrons to access lead sulfate, and thus facilitate charge of a negative electrode to improve the PSOC lifetime of a lead-acid battery. In the course of conducting studies on improvement of the PSOC lifetime, the present inventors have found that graphite in a negative electrode material may cause permeation short circuit. When graphite particles are exposed to a negative electrode plate surface or protruded from the surface, exposed portions or the like of the graphite particles may act as a center of precipitation of metallic lead. Accordingly, dendrites of metallic lead may grow from the exposed graphite particles, and penetrate through a separator, thus causing short circuit. The possibility that graphite causes permeation short circuit has not been known heretofore, and the present inventors have found the possibility for the first time.

JP2015-032482 discloses a lead-acid battery comprising a positive and a negative electrode plate, an electrolyte solution, and a positive and a negative electrode material. The negative electrode material comprises carbon, such as graphite or carbon fiber, in an amount preferably within 0.5 to 2.5 mass%, and 0.6 mass% of barium sulfate. The positive electrode material contains antimony in an amount of 0.01 to 0.3 mass% to improve the durability of the positive electrode.

JP 5 712927 discloses a lead-acid battery including carbon in the form of graphite in the negative electrode active material in an amount of 0.5 to 3.0 mass% with respect to the mass of the negative electrode active material. The surface layer contains antimony in an amount of less than 0.1 mass% on the surface of a positive electrode grid. The negative electrode active material comprises 0.6 mass% of barium sulfate, 0.5 mass% of expanded graphite, and 0.2 mass% of acetylene black.

JP2015-005528 discloses a lead acid battery containing an electrolyte comprising aluminum ions, and a negative electrode active material comprising carbon black, graphite, and barium sulfate.

JP2012-079431 discloses a lead-acid battery comprising a positive electrode plate containing antimony in an amount comprised between 0.01 to 0.2 mass% of the positive electrode active material, a negative electrode plate containing lead powder, barium sulfate in an amount of 0.5 mass%, lignin in an amount of 0.15 mass%, and carbon black in an amount of 0.2 mass %. The electrolyte solution further contains aluminum ions.

US2012/248383 A1 discloses a lead-acid battery comprising a negative electrode active material containing carbon, barium sulfate in an amount of 0.2-1 mass%, and lignosulfonate.

WO2016/031772 A1 discloses a lead-acid battery comprising a negative electrode active material containing graphite and barium sulfate in an amount of 0.3-2.0 mass%

### SUMMARY

An object of the present invention is to provide a lead-acid battery in which permeation short circuit is suppressed and wherein the PSOC lifetime is improved.

An aspect of the present invention provides a lead-acid battery including a negative electrode plate, a positive electrode plate and an electrolyte solution, wherein the negative electrode plate includes a negative electrode material containing graphite or carbon fiber, and the positive electrode plate includes a positive electrode material containing antimony wherein the positive electrode plate includes a positive electrode material as positive active material containing 0.01 to 0.1 mass% of antimony, and wherein the negative electrode material contains 0.70 mass% to 1.75 mass% of the barium element.

According to the present invention, a lead-acid battery in which permeation short circuit is suppressed and wherein the PSOC lifetime is improved can be provided.

### BRIEF DESCRIPTION OF DRAWINGS

FIG. 1 is a sectional view of a lead-acid battery in an example.
FIG. 2 is a view schematically showing a PSOC lifetime test in an example.
FIG. 3 is a characteristic diagram showing influences of a graphite content.
FIG. 4 is a characteristic diagram showing influences of an antimony content.
FIG. 5 is a characteristic diagram showing influences of a barium sulfate content.
FIG. 6 is a characteristic diagram showing influences of a density of a negative electrode material.
FIG. 7 is a characteristic diagram showing influences of a carbon black content.
FIG. 8 is a characteristic diagram showing influences of an aluminum ion content.

### DESCRIPTION OF EMBODIMENTS

An aspect of the present invention provides a lead-acid battery including a negative electrode plate, a positive electrode plate and an electrolyte solution, wherein the negative electrode plate includes a negative electrode material containing graphite or carbon fiber, and the positive electrode plate includes a positive electrode material containing antimony wherein the positive electrode plate includes a positive electrode material as positive active material containing 0.01 to 0.1 mass% of antimony, and wherein the negative electrode material contains 0.70 mass% to 1.75 mass% of the barium element.

The negative electrode plate includes a negative electrode current collector (negative electrode grid) and a negative electrode material (negative active material). The positive electrode plate includes a positive electrode current collector (positive electrode grid) and a positive electrode material (positive active material). Solid components other than the current collector belong to electrode materials (active materials). Hereinafter, the content is shown as a concentration (mass%) in a formed positive electrode material or negative electrode material in a full charge state. The full charge refers to a state in which a battery is charged at 5-hour rate current until a terminal voltage during charge as measured every 15 minutes shows a constant value (±0.01 V) consecutive three times.

Graphite or carbon fiber (hereinafter, referred to as graphite or the like) in the negative electrode material provides a passage for electrons to access lead sulfate in the negative electrode material, and thus facilitates reduction of lead sulfate accumulated in the lower part of the electrode plate in the lead-acid battery, so that the PSOC lifetime is improved. The content of graphite or the like in the negative electrode material is preferably 0.5 mass% or more because the PSOC lifetime is considerably improved. The content of graphite or the like in the negative electrode material is more preferably 1.0 mass% or more because the PSOC lifetime is remarkably improved.

When the negative electrode material contains graphite or the like, permeation short circuit easily occurs. It has not been known heretofore that when the negative electrode material in the lead-acid battery contains graphite or the like, permeation short circuit easily occurs.

The content of graphite or the like in the negative electrode material is preferably 2.4 mass% or less because permeation short circuit can be suppressed. The content of graphite or the like in the negative electrode material is more preferably 2.0 mass% or less because permeation short circuit can be further suppressed.

The present inventors have made an attempt to suppress occurrence of permeation short circuit while improving the PSOC lifetime by containing graphite or the like in the negative electrode material. Resultantly, the present inventors have found that even when the negative electrode material contains graphite or the like, permeation short circuit can be suppressed by containing antimony in the positive electrode. It has not been known heretofore that permeation short circuit can be suppressed by containing antimony in the positive electrode material.

The effect of suppressing permeation short circuit by containing antimony in the positive electrode material is high when the negative electrode material contains graphite (Table 4). It has not been known heretofore that graphite in the negative electrode material is associated with permeation short circuit, and it has also not been known heretofore that antimony in the positive electrode material is associated with permeation short circuit. Therefore, it is not predictable that the effect of suppressing permeation short circuit by containing antimony in the positive electrode material is enhanced when the negative electrode material contains graphite.

The content of antimony in the positive electrode material is 0.01 mass% or more because permeation short circuit can be considerably suppressed. The content of antimony in the positive electrode material is more preferably 0.05 mass% or more because permeation short circuit can be remarkably suppressed. The content of antimony is a content in terms of metallic antimony, and antimony may exist in the form of a metal, an oxide or the like.

The content of antimony in the positive electrode material is preferably 0.02 mass% or more because the PSOC lifetime is considerably improved.

When the content of antimony in the positive electrode material is 0.10 mass% or less, a reduction in initial 5-hour rate capacity can be suppressed. Therefore, the content of antimony in the positive electrode material is 0.01 mass% to 0.10 mass%.

The negative electrode material contains barium sulfate because permeation short circuit can be suppressed. The negative electrode material contains 1.2 mass% or more of barium sulfate because permeation short circuit can be remarkably suppressed.

Simple substance of barium or a barium compound such as barium carbonate may be used in place of barium sulfate. This is because when the simple substance of barium or barium compound is added to the negative electrode material, it changes into barium sulfate after being added. The simple substance of barium or barium compound is added in an amount of 1.2 mass% or more as a content in terms of barium sulfate based on the mass of the negative electrode material in a full charge state. As a content in terms of a barium element, the content of barium in the negative electrode material is 0.70 mass% or more.

When the content of barium sulfate in the negative electrode material is 3.0 mass% or less, deterioration of regenerative charge acceptability can be suppressed. Therefore, the content of barium sulfate in the negative electrode material is 3.0 mass% or less. As a content in terms of a barium element, the content of barium in the negative electrode material is 0.7 mass% to 1.75 mass%.

When the density of the negative electrode material is 4.0 g/cm³ or less, permeation short circuit can be suppressed, and therefore the density of the negative electrode material is preferably 4.0 g/cm³ or less. When the density of the negative electrode material is 3.8 g/cm³ or less, permeation short circuit can be considerably suppressed, and therefore the density of the negative electrode material is more preferably 3.8 g/cm³ or less.

When the density of the negative electrode material is 3.6 g/cm³ or more, regenerative charge acceptability is improved, and therefore the density of the negative electrode material is preferably 3.6 g/cm³ or more. When the density of the negative electrode material is 3.7 g/cm³ or more, regenerative charge acceptability is considerably improved, and therefore the density of the negative electrode material is more preferably 3.7 g/cm³ or more.

Preferably, the negative electrode material contains carbon black. When the negative electrode material contains carbon black, permeation short circuit can be suppressed. When the content of carbon black in the negative electrode material is 0.10 mass% or more, permeation short circuit can be remarkably suppressed, and therefore the content of carbon black in the negative electrode material is preferably 0.10 mass% or more.

When the content of carbon black in the negative electrode material is 0.05 mass% or more, the effect of improving the PSOC lifetime is enhanced. Therefore, the content of carbon black in the negative electrode material is preferably 0.05 mass% or more. When the content of carbon black in the negative electrode material is 0.50 mass% or more, the effect of improving the PSOC lifetime is especially enhanced, and therefore the content of carbon black in the negative electrode material is preferably 0.50 mass% or more. When the content of carbon black in the negative electrode material is more than 1.00 mass%, a negative active material paste is excessively hard, and thus difficult to pack in the current collector, and therefore the content of carbon black in the negative electrode material is preferably 1.00 mass% or less.

When an electrolyte solution contains aluminum ions, permeation short circuit can be further suppressed. This effect is remarkable when the electrolyte solution contains 0.02 mol/L or more of aluminum ions. Therefore, the aluminum ion concentration of the electrolyte solution is preferably 0.02 mol/L or more.

When the electrolyte solution contains 0.01 mol/L or more of aluminum ions, the PSOC lifetime is considerably improved, and therefore the aluminum ion concentration of the electrolyte solution is preferably 0.01 mol/L or more. When the electrolyte solution contains 0.10 mol/L or more of aluminum ions, the PSOC lifetime is remarkably improved, and therefore the aluminum ion concentration of the electrolyte solution is preferably 0.10 mol/L or more.

When the electrolyte solution contains 0.25 mol/L or less of aluminum ions, the PSOC lifetime is considerably improved, and therefore the aluminum ion concentration of the electrolyte solution is preferably 0.25 mol/L or less. When the electrolyte solution contains 0.20 mol/L or less of aluminum ions, the PSOC lifetime is remarkably improved, and therefore the aluminum ion concentration of the electrolyte solution is preferably 0.20 mol/L or less.

### <Negative Electrode Plate>

A negative electrode material paste to be used is obtained by mixing a predetermined amount of scaly graphite, a predetermined amount of barium sulfate, carbon black, lignin as a shrink-proofing agent and synthetic resin fiber as a reinforcing material with a lead powder prepared by a ball mill method.

The graphite is not necessarily scaly graphite, and may be scalelike graphite, natural graphite such as earthy graphite, or artificial graphite, or may be expansive graphite, expanded graphite or the like. The graphite is preferably scaly graphite or expanded graphite, especially preferably scaly graphite. The expanded graphite is graphite after expansion. Preferably, the graphite has a mean particle size of, for example, 10 µm or more and 300 µm or less. The carbon fiber has the same effect as that of the graphite. The carbon fiber to be used has a length of, for example, 5 µm or more and 500 µm or less.

The barium sulfate has a mean primary particle size of, for example, 0.3 µm or more and 2.0 µm or less, and a mean secondary particle size of, for example, 1 µm or more and 10 µm or less. The content of the lignin is arbitrary. A synthetic shrink-proofing agent such as a condensate of a sulfonated bisphenol may be used in place of lignin. The content of the reinforcing material and the kind of the synthetic resin fiber are arbitrary. The method for producing the lead powder, the oxygen content and so on are arbitrary, and the negative electrode plate may contain other additives, a water-soluble synthetic polymer electrolyte and so on.

The above-mentioned mixture is formed into a paste with water and sulfuric acid, packed in the negative electrode current collector, and then cured and dried to prepare an unformed negative electrode plate. The packed amount of the negative electrode material per one formed negative electrode plate may be, for example, 30 g or more and 70 g or less. The density of the formed negative electrode material is adjusted by changing the added amount of water during preparation of the paste. The negative electrode current collector is, for example, an expanded grid, a cast grid, a punched grid or the like.

### <Positive Electrode Plate>

A positive electrode material paste to be used is obtained by mixing an antimony trioxide powder and synthetic resin fiber as a reinforcing material with a lead powder prepared by a ball mill method, and forming the mixture into a paste with water and sulfuric acid. The paste is packed in the positive electrode current collector, and then cured and dried to prepare an unformed positive electrode plate. The kind of the lead powder and the conditions for production of the lead powder are arbitrary, and the mean particle size of the antimony trioxide powder is preferably, for example 0.1 µm or more and 5 µm or less. Powder of metallic antimony or the like may be used in place of an antimony trioxide powder, and the antimony exists as a metal, an oxide, a sulfuric acid compound or the like in the positive electrode material. The density of the formed positive electrode material may be, for example, 3.5 g/cm³ or more and 4.8 g/cm³ or less. The positive electrode current collector is, for example, an expanded grid, a cast grid, a punched grid or the like.

Either of unformed positive electrode plates or unformed negative electrode plates is covered with a separator, the unformed negative electrode plates and the unformed positive electrode plates are alternately layered, and each of the unformed negative electrode plates and each of the unformed positive electrode plate are connected by a strap to obtain an electrode plate group. The electrode plate groups are connected in series, stored in a cell chamber of a battery container, and subjected to formation in the battery container by adding sulfuric acid to prepare a flooded-type lead-acid battery. The separator is made of, for example, synthetic resin, preferably a polyolefin, more preferably polyethylene. Preferably, the separator has a rib protruded from a base. The base thickness, the total thickness or the like of the separator is arbitrary, but the base thickness of the separator is preferably 0.15 mm or more and 0.25 mm or less. The base thickness of the separator is not connected with the invention in claims. The distance between the positive electrode plate and the negative electrode plate may be, for example, 0.5 mm or more and 0.9 mm or less. The ratio N/P of the mass P of the positive electrode material and the mass N of the negative electrode material per lead-acid battery may be for example, 0.62 or more and 0.95 or less.

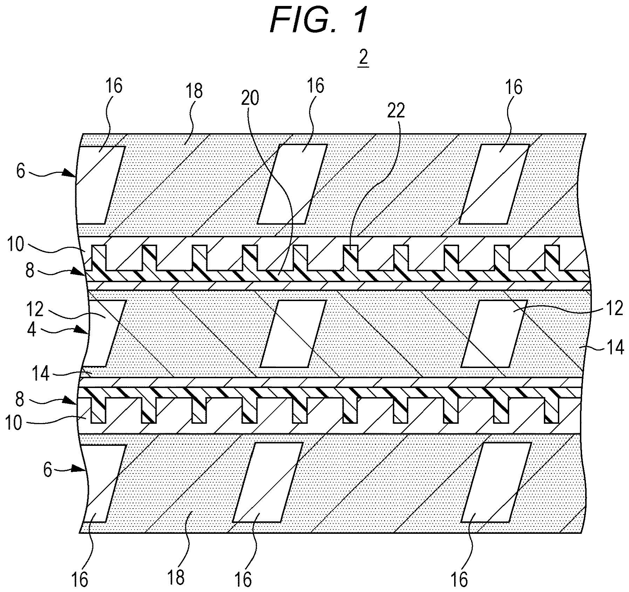

FIG. 1 shows a lead-acid battery 2. Reference numeral 4 denotes a negative electrode plate, reference numeral 6 denotes a positive electrode plate, reference numeral 8 denotes a separator, and reference numeral 10 denotes an electrolyte solution mainly composed of sulfuric acid. The negative electrode plate 4 includes a negative electrode current collector 12 and a negative electrode material 14, and the positive electrode plate 6 includes a positive electrode current collector 16 and a positive electrode material 18. The separator 8 is in the form of a bag, and includes a base 20 and a rib 22, the negative electrode plate 4 is stored in the bag, and the rib 22 faces the positive electrode plate 6. However, the positive electrode plate 6 may be stored in the separator 8 with the rib 22 facing the positive electrode plate 6. The separator is not required to be in the form of a bag as long as it separates the positive electrode plate and the negative electrode plate from each other, and for example, a leaflet-shaped glass mat or retainer mat may be used.

The content of barium in the formed negative electrode material is quantitatively determined in the following manner. The lead-acid battery 2 in a full charge state is disassembled, the negative electrode plate 4 is washed with water, and dried to remove a sulfuric acid component, and the negative electrode material 14 is collected. The negative electrode material is crushed, 300 g/L hydrogen peroxide water is added in an amount of 20 mL per 100 g of the negative electrode material, nitric acid obtained by diluting 1 part by volume of 60 mass% concentrated nitric acid with 3 parts by volume of ion-exchanged water is added, and the mixture is heated under stirring for 5 hours to dissolve lead as lead nitrate. Barium sulfate is dissolved, and the barium concentration in the resulting solution is quantitatively determined by atomic absorption measurement, and converted to the barium content in the negative electrode material. The barium sulfate content in the negative electrode material can be determined from the barium content in the negative electrode material.

The content of each of graphite and carbon black in the formed negative electrode material is quantitatively determined in the following manner. The lead-acid battery 2 in a full charge state is disassembled, the negative electrode plate 4 is washed with water, and dried to remove a sulfuric acid component, and the negative electrode material 14 is collected. The negative electrode material is crushed, hydrogen peroxide water in a concentration of 300 g/L is added in an amount of 20 mL per 100 g of the negative electrode material, nitric acid obtained by diluting 1 part by volume of 60 mass% concentrated nitric acid with 3 parts by volume of ion-exchanged water is added, and the mixture is heated under stirring for 5 hours to dissolve lead as lead nitrate. Barium sulfate is dissolved, and graphite, carbon black and a reinforcing material are then separated by filtration.

Next, solid components (graphite, carbon black and reinforcing material) obtained by filtration are dispersed in water. The dispersion is sieved twice using a sieve impervious to the reinforcing material, and washed with water to remove the reinforcing material, so that the carbon black and the graphite are removed.

To the negative electrode material paste are added the carbon black and the graphite together with an organic shrink-proofing agent such as lignin, and thus even in the negative electrode material after formation, the carbon black and the graphite exist in a state in which an aggregate thereof is collapsed owing to the interface activation effect of the organic shrink-proofing agent. Since the organic shrink-proofing agent is dissolved in water and lost in the above-mentioned series of separation operations, the separated carbon black and graphite are dispersed in water again, 15 g of the organic shrink-proofing agent is added based on 100 mL of water, the mixture is stirred to collapse the aggregate of the carbon black and the graphite again, and in this state, the following separation operation is carried out.

After the above-mentioned operation, the suspension containing the carbon black and the graphite is made to pass through a sieve substantially impervious to graphite and pervious to carbon black, and thus the carbon black and the graphite are separated from each other. Through this operation, the graphite remains on the sieve, and a liquid passing through the sieve contains the carbon black. The graphite and carbon black separated through the above-mentioned series of operations are washed with water and dried, and then each weighed. The carbon fiber can be separated in the same manner as in the case of the graphite.

The electrolyte solution is extracted, and the aluminum ion concentration in the electrolyte solution is quantitatively determined by ICP emission spectral analysis.

A method for quantitatively determining the antimony content in the positive electrode material is shown below. The lead-acid battery 2 in a full charge state is disassembled, the positive electrode plate 6 is washed with water, and dried to remove a sulfuric acid component, and the positive electrode material 18 is collected. Based on the same treatment as in the case of the negative electrode material 14, lead and antimony are dissolved in concentrated nitric acid, and the antimony content is quantitatively determined by ICP emission spectral analysis.

A method for quantitatively determining the density of the negative electrode material is shown below. A formed negative electrode material in a full charge state is washed with water and dried, and the apparent volume v (cm³) per 1 g and the total pore volume u (cm³) per 1 g of the negative electrode material are measured in an uncrushed state by a mercury penetration method. The apparent volume v is a sum of the solid volume and the closed pore volume of the negative electrode material.

The negative electrode material is packed in a vessel, the volume V1 (cm³) of which is known, and the V2 (cm³) of spaces with a size corresponding to a pore size of 100 µm or more is measured by a mercury penetration method. Penetration of mercury is continued to measure the total pore volume u, the value of (V1 - V2) - u is defined as the apparent volume v (cm³), and the density d (g/cm³) of the negative electrode material is determined from the equation: d = 1/(v + u) = 1/(V1 - V2). In the measurement by the mercury penetration method, the negative electrode material is pressurized to a maximum pressure of 4.45 psia (30.7 Kpa), and the contact angle and the surface tension of mercury are set to 130° and 484 dynes/cm, respectively.

### <Other Embodiments>

The lead-acid battery according to the embodiment has excellent PSOC lifetime performance and permeation short circuit resistance performance, and is therefore suitable as a lead-acid battery for idling-stop vehicles or the like. The lead-acid battery according to the embodiment can be used for cycle applications such as forklift applications in addition to idling-stop vehicle applications. In an example, the lead-acid battery is a flooded-type lead-acid battery, but may be a valve regulated lead-acid battery. The lead-acid battery according to the embodiment is preferably a flooded-type lead-acid battery. Even when the lead-acid battery according to the embodiment is used in a partial state of charge, permeation short circuit is suppressed, and therefore the lead-acid battery is suitable as a lead-acid battery to be used in a partial state of charge.

Hereinafter, examples of the present invention and comparative examples not part of the invention will be described. In the example, the negative electrode material is sometimes referred to as a negative active material, and the positive electrode material is sometimes referred to as a positive active material.

### EXAMPLE

A negative active material paste to be used was obtained by mixing a predetermined amount of scaly graphite (mean particle size: 150 µm), a predetermined amount of barium sulfate (mean primary particle size: 0.79 µm and mean secondary particle size: 2.5 µm), carbon black, lignin (content: 0.2 mass%) as a shrink-proofing agent and synthetic resin fiber (content: 0.1 mass%) as a reinforcing material with a lead powder prepared by a ball mill method. The content of the scaly graphite was changed within a range between 0 mass% and 2.5 mass%. The content of the barium sulfate was changed within a range between 0.6 mass% and 4.0 mass%.

The above-mentioned mixture was formed into a paste with water and sulfuric acid, packed in an expand-type negative electrode grid composed of an antimony-free Pb-Ca-Sn-based alloy, and cured and dried. The density of the negative active material was adjusted to 3.4 g/cm³ or more and 4.1 g/cm³ or less by changing the amount of water.

A positive active material paste to be used was obtained by mixing an antimony trioxide powder (mean particle size: 0.5 µm) in an amount of 0 to 0.12 mass% in terms of a metal and synthetic resin fiber as a reinforcing material in an amount of 0.1 mass%, as a content in a formed state and after full charge, with a lead powder prepared by a ball mill method, and forming the mixture into a paste with water and sulfuric acid. The paste was packed in an expand-type positive electrode grid composed of an antimony-free Pb-Ca-Sn-based alloy, and cured and dried. The paste was adjusted so that a positive active material after formation had a density of 4.1 g/cm³.

An unformed negative electrode plate was covered with a polyethylene separator (mean pore size: 0.1 µm) with a rib protruded from a base, and the total thickness of the base and the rib was fixed to 0.7 mm. In the example, separators with a base thickness of 0.20 mm and with a base thickness of 0.25 mm were used, and the distance between a positive electrode plate and a negative electrode plate was set to 0.7 mm. Seven unformed negative electrode plates and six unformed positive electrode plates were alternately layered, and each of the unformed negative electrode plates and each of the unformed positive electrode plate were connected by a strap to obtain an electrode plate group. Six electrode plate groups were connected in series, stored in a cell chamber of a battery container, and subjected to formation in the battery container by adding sulfuric acid with a specific gravity of 1.285 at 20°C to obtain a flooded-type lead-acid battery having a B20 size and 5-hour rate capacity of 30 Ah.

The contents of barium, graphite and carbon black in the negative active material were each measured in the manner described above. For separation of the carbon black and graphite and the reinforcing material in the negative active material, a sieve with an aperture diameter of 1.4 mm was used. The separated carbon black and graphite were dispersed in water, VANILLEX N (manufactured by Nippon Paper Industries Co., Ltd.) as a lignin sulfonic acid salt was then added as an organic shrink-proofing agent, and the carbon black and the graphite were separated from each other using a sieve with an aperture diameter of 20 µm. Even when graphite having a particle size of less than 20 µm was used, graphite having a particle size of 3 µm or more was substantially unable to pass through the sieve due to clogging of the sieve. The aluminum ion concentration in the electrolyte solution, the antimony content in the positive active material, and the density of the negative active material were each measured in the manner described above.

For a lead-acid battery 2 in a full charge state, the initial 5-hour rate capacity and regenerative charge acceptability were measured, and a PSOC lifetime test and a permeation short circuit acceleration test were conducted. The lead-acid battery in a full charge state was discharged at a 5-hour rate current with the electrolyte solution temperature set to 25°C, and the time until the terminal voltage decreased to 1.75 V/cell was measured. From the time, the initial 5-hour rate capacity was calculated. The lead-acid battery in a full charge state was discharged by only 10% of the 5-hour rate capacity at a 5-hour rate current with the electrolyte solution temperature set to 25°C, and the lead-acid battery was left standing at room temperature for 12 hours, and charged at 2.42 V/cell. Here, the amount of charge during initial 10 seconds was defined as regenerative charge acceptability. The regenerative charge acceptability is charge acceptability when the battery is charged after being left standing after discharge. The regenerative charge acceptability is different from charge acceptability when the battery is charged without being left standing after discharge.

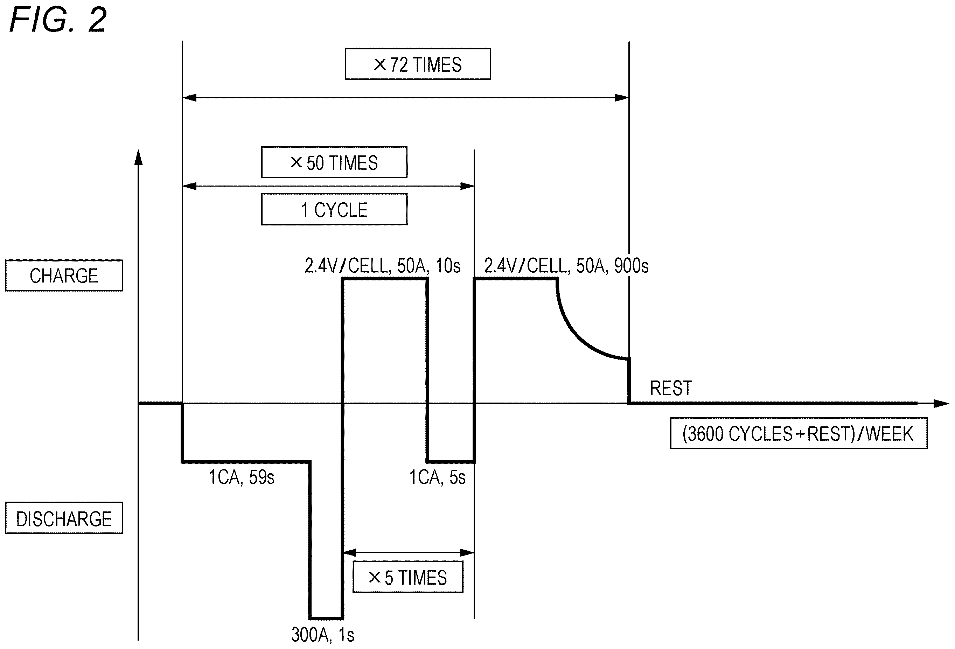

Details of the PSOC lifetime test are shown in FIG. 2 and Table 1. The "1 CA" shows 30 A in the case of a battery having a 5-hour rate capacity of 30 Ah, and the "40°C air" means that the test was conducted in an air bath at 40°C. The number of cycles until the terminal voltage reaches 1.2 V/cell in the test pattern in Table 1 is defined as a PSOC lifetime. Details of the permeation short circuit acceleration test are shown in Table 2. The test is conducted under conditions that accelerate occurrence of permeation short circuit, and in this test, the permeation short circuit occurrence ratio is remarkably higher than under practical service conditions of the lead-acid battery. Five cycles of steps 1 to 4 in the permeation short circuit acceleration test pattern shown in Table 2 were carried out, and after the five cycles, the lead-acid battery was disassembled to examine the ratio of lead-acid batteries in which short circuit occurred. The "25°C water" means that the test was conducted in a water bath at 25°C. In Tables 1 and 2, the "CC discharge" denotes constant current discharge, the "CV charge" denotes constant voltage charge, and the "CC charge" denotes constant current charge.

**[Table 1]**

| Steps | Details | Test conditions | | Temperature |
|---|---|---|---|---|
| | | Current, voltage | Termination conditions | |
| 1 | CC discharge | 1CA | 59 seconds | 40°C air |
| 2 | CC discharge | 300A | 1 second | 40°C air |
| 3 | CV charge | 2.4 V/cell, maximum: 50 A | 10 seconds | 40°C air |
| 4 | CC discharge | 1CA | 5 seconds | 40°C air |
| 5 | Repeat steps 3 and 4 | 5 times | | 40°C air |
| 6 | Repeat steps 1 to 5 | 50 times | | 40°C air |
| 7 | CV charge | 2.4 V/cell, maximum: 50 A | 900 seconds | 40°C air |
| 8 | Repeat steps 1 to 7 | 72 times | | 40°C air |
| 9 | Rest | 15h | | 40°C air |
| 10 | Return to step 1 | - | | 40°C air |

**[Table 2]**

| Steps | Details | Test conditions | | Temperature |
|---|---|---|---|---|
| | | Current, voltage | Termination conditions | |
| 1 | CC discharge | 0.05CA | 1.0 V/cell | 25°C water |
| 2 | Leave with resistance connected | 10 Ω | 28 days | 25°C water |
| 3 | CV charge | 2.4 V/cell, maximum: 50 A | 10 minutes | 25°C water |
| 4 | CC charge | 0.05CA | 27 hours | 25°C water |
| 5 | Repeat steps 1 to 4 | 5 times | | 25°C water |

Main results are shown in Table 3. The base thickness of the separator was 0.25 mm, and the density of the negative active material was 3.8 g/cm³. Except for the permeation short circuit occurrence ratio, data are shown as values relative to comparative example sample A1 where the value for sample A1 is 100%. Samples A2-A3, A8-A10, A15-A17, A22-A24, A29-A31, A36, and B1-B4 represent comparative examples which are not part of the invention.

**[Table 3]**

| Samples | Scaly graphite (mass%) | Barium sulfate (mass%) | Antimony (mass%) | Base thickness of separator (mm) | Density of negative active material (g/cm³) | Regenerative charge acceptability (A1 ratio) | PSOC lifetime (A1 ratio) | Permeation short circuit occurrence ratio (%) | Initial 5-hour rate capacity (A1 ratio) |
|---|---|---|---|---|---|---|---|---|---|
| A1 | 0 | 0.6 | 0.04 | 0.25 | 3.8 | 100 | 100 | 20 | 100 |
| A2 | 0.5 | 0.6 | 0.04 | 0.25 | 3.8 | 99 | 109 | 40 | 100 |
| A3 | 0.5 | 1.0 | 0.04 | 0.25 | 3.8 | 96 | 114 | 20 | 100 |
| A4 | 0.5 | 1.2 | 0.04 | 0.25 | 3.8 | 96 | 118 | 0 | 100 |
| A5 | 0.5 | 1.5 | 0.04 | 0.25 | 3.8 | 94 | 121 | 0 | 100 |
| A6 | 0.5 | 2.0 | 0.04 | 0.25 | 3.8 | 93 | 118 | 0 | 100 |
| A7 | 0.5 | 3.0 | 0.04 | 0.25 | 3.8 | 91 | 120 | 0 | 100 |
| A8 | 0.5 | 4.0 | 0.04 | 0.25 | 3.8 | 89 | 116 | 0 | 100 |
| A9 | 1.0 | 0.6 | 0.04 | 0.25 | 3.8 | 98 | 112 | 40 | 100 |
| A10 | 1.0 | 1.0 | 0.04 | 0.25 | 3.8 | 95 | 118 | 40 | 100 |
| A11 | 1.0 | 1.2 | 0.04 | 0.25 | 3.8 | 95 | 121 | 20 | 100 |
| A12 | 1.0 | 1.5 | 0.04 | 0.25 | 3.8 | 93 | 124 | 0 | 100 |
| A13 | 1.0 | 2.0 | 0.04 | 0.25 | 3.8 | 92 | 121 | 0 | 100 |
| A14 | 1.0 | 3.0 | 0.04 | 0.25 | 3.8 | 90 | 123 | 0 | 100 |
| A15 | 1.0 | 4.0 | 0.04 | 0.25 | 3.8 | 88 | 119 | 0 | 100 |
| A16 | 1.5 | 0.6 | 0.04 | 0.25 | 3.8 | 98 | 119 | 60 | 100 |
| A17 | 1.5 | 1.0 | 0.04 | 0.25 | 3.8 | 95 | 125 | 40 | 100 |
| A18 | 1.5 | 1.2 | 0.04 | 0.25 | 3.8 | 95 | 129 | 20 | 100 |
| A19 | 1.5 | 1.5 | 0.04 | 0.25 | 3.8 | 93 | 132 | 20 | 100 |
| A20 | 1.5 | 2.0 | 0.04 | 0.25 | 3.8 | 91 | 129 | 0 | 100 |
| A21 | 1.5 | 3.0 | 0.04 | 0.25 | 3.8 | 90 | 131 | 0 | 100 |
| A22* | 1.5 | 4.0 | 0.04 | 0.25 | 3.8 | - | - | - | - |
| A23 | 2.0 | 0.6 | 0.04 | 0.25 | 3.8 | 98 | 115 | 60 | 100 |
| A24 | 2.0 | 1.0 | 0.04 | 0.25 | 3.8 | 95 | 121 | 40 | 100 |
| A25 | 2.0 | 1.2 | 0.04 | 0.25 | 3.8 | 95 | 124 | 20 | 100 |
| A26 | 2.0 | 1.5 | 0.04 | 0.25 | 3.8 | 93 | 128 | 20 | 100 |
| A27 | 2.0 | 2.0 | 0.04 | 0.25 | 3.8 | 92 | 124 | 20 | 100 |
| A28 | 2.0 | 3.0 | 0.04 | 0.25 | 3.8 | 91 | 127 | 0 | 100 |
| A29* | 2.0 | 4.0 | 0.04 | 0.25 | 3.8 | - | - | - | - |
| A30 | 2.5 | 0.6 | 0.04 | 0.25 | 3.8 | 97 | 103 | 80 | 100 |
| A31 | 2.5 | 1.0 | 0.04 | 0.25 | 3.8 | 94 | 108 | 60 | 100 |
| A32 | 2.5 | 1.2 | 0.04 | 0.25 | 3.8 | 94 | 111 | 60 | 100 |
| A33 | 2.5 | 1.5 | 0.04 | 0.25 | 3.8 | 92 | 114 | 40 | 100 |
| A34 | 2.5 | 2.0 | 0.04 | 0.25 | 3.8 | 91 | 111 | 40 | 100 |
| A35 | 2.5 | 3.0 | 0.04 | 0.25 | 3.8 | 89 | 113 | 20 | 100 |
| A36* | 2.5 | 4.0 | 0.04 | 0.25 | 3.8 | - | - | - | - |
| B1 | 1.5 | 0.6 | 0 | 0.25 | 3.8 | 97 | 99 | 80 | 100 |
| B2 | 1.5 | 1.2 | 0 | 0.25 | 3.8 | 94 | 107 | 40 | 100 |
| B3 | 1.5 | 1.5 | 0 | 0.25 | 3.8 | 92 | 110 | 40 | 100 |
| B4 | 1.5 | 3.0 | 0 | 0.25 | 3.8 | 91 | 112 | 20 | 100 |
| B5 | 1.5 | 1.5 | 0.01 | 0.25 | 3.8 | 92 | 112 | 20 | 101 |
| B6 | 1.5 | 1.5 | 0.02 | 0.25 | 3.8 | 92 | 130 | 20 | 101 |
| B7 | 1.5 | 1.5 | 0.10 | 0.25 | 3.8 | 94 | 140 | 0 | 95 |
| B8 | 1.5 | 1.5 | 0.12 | 0.25 | 3.8 | 93 | 146 | 0 | 93 |
| B9 | 2.0 | 3.0 | 0.01 | 0.25 | 3.8 | 91 | 108 | 0 | 100 |
| B10 | 2.0 | 3.0 | 0.02 | 0.25 | 3.8 | 91 | 123 | 0 | 100 |
| B11 | 2.0 | 3.0 | 0.10 | 0.25 | 3.8 | 92 | 130 | 0 | 97 |

| | | | | | | | | | |
|---|---|---|---|---|---|---|---|---|---|
| * Preparation was impossible because the active material paste was excessively hard. | | | | | | | | | |

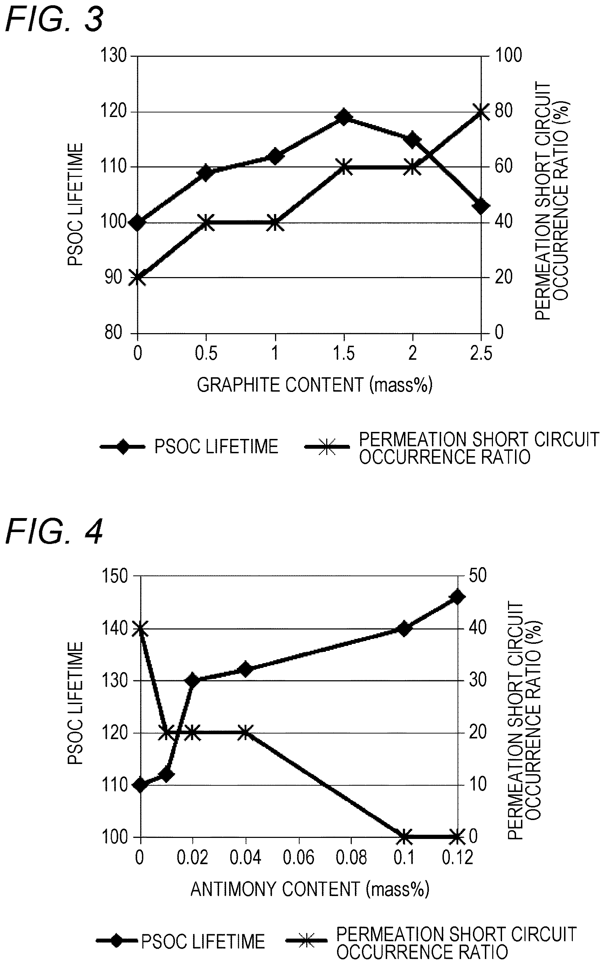

Table 3 and FIG. 3 show that when the negative active material contains graphite, the PSOC lifetime is improved. When the negative active material contains 0.5 mass% or more of graphite, the PSOC lifetime is considerably improved, and when the negative active material contains 1.0 mass% or more of graphite, the PSOC lifetime is remarkably improved.

It is apparent that when the negative active material contains graphite, permeation short circuit easily occurs. It has not been known heretofore that when the negative active material contains graphite, permeation short circuit easily occurs. When the graphite content in the negative active material is 2.4 mass% or less, permeation short circuit is suppressed, and when the graphite content in the negative active material is 2.0 mass% or less, permeation short circuit is considerably suppressed (FIG. 3). It has not been known heretofore that graphite in the negative active material is associated with permeation short circuit, and therefore the above-mentioned effect is not predictable.

The present inventors made an attempt to suppress occurrence of permeation short circuit while improving the PSOC lifetime by containing graphite in the negative active material. Resultantly, the present inventors found that permeation short circuit can be suppressed by containing antimony in the positive active material (FIG. 4). It has not been known heretofore that permeation short circuit can be suppressed by containing antimony in the positive active material, and suppression of permeation short circuit by containing antimony in the positive active material was an unexpected result.

**[Table 4]**

| Samples | Scaly graphite (mass%) | Barium sulfate (mass%) | Antimony (mass%) | Base thickness of separator (mm) | Density of negative active material (g/cm³) | PSOC lifetime (A1 ratio) | Permeation short circuit occurrence ratio (%) |
|---|---|---|---|---|---|---|---|
| X1 | 0 | 0.6 | 0 | 0.2 | 3.6 | 86 | 30 |
| X2 | 0 | 0.6 | 0.01 | 0.2 | 3.6 | 88 | 25 |
| X3 | 0 | 0.6 | 0.02 | 0.2 | 3.6 | 100 | 25 |
| Y1 | 0.5 | 0.6 | 0 | 0.2 | 3.6 | 90 | 60 |
| Y2 | 0.5 | 0.6 | 0.01 | 0.2 | 3.6 | 96 | 45 |
| Y3 | 0.5 | 0.6 | 0.02 | 0.2 | 3.6 | 110 | 45 |

Table 4 shows comparative examples X1-Y3 which are not part of the invention. These comparative examples show the influences of graphite in the negative active material on the effect of suppressing permeation short circuit by antimony in the positive active material. The effect of suppressing permeation short circuit by containing 0.01 mass% of antimony in the positive active material was 5% when the negative active material did not contain graphite, whereas the above-mentioned effect was 15% when the negative active material contained graphite (Table 4). This result shows that the effect of suppressing permeation short circuit by containing antimony in the positive active material is high when the negative active material contains graphite. It has not been known heretofore that graphite in the negative active material is associated with permeation short circuit, and it has not been known heretofore that antimony in the positive active material is associated with permeation short circuit. Therefore, it is not predictable that the effect of suppressing permeation short circuit by containing antimony in the positive active material is enhanced when the negative active material contains graphite.

The effect of suppressing permeation short circuit by antimony is remarkably observed when the content of antimony is 0.01 mass% or more (FIG. 4). When the content of antimony in the positive active material is 0.10 mass% or less, a reduction in initial 5-hour rate capacity can be suppressed (Table 3).

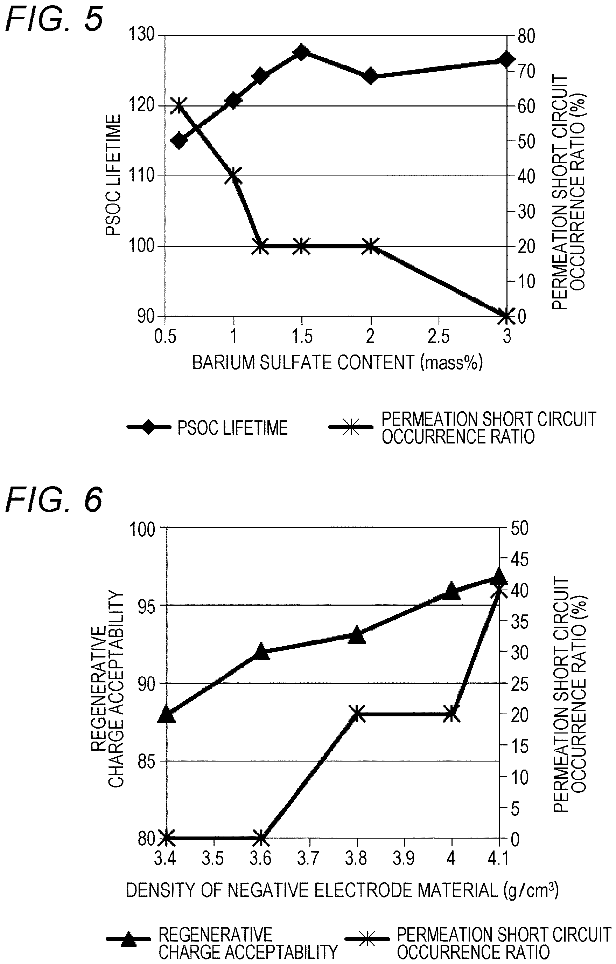

Table 3 and FIG. 5 show that when the negative active material contains barium sulfate, permeation short circuit can be suppressed. It has not been known heretofore that barium sulfate in the negative active material is associated with permeation short circuit, and therefore suppression of permeation short circuit by including barium sulfate in the negative active material was unexpected result. When the barium sulfate content in the negative active material is 1.0 mass% or more, the effect of suppressing permeation short circuit is enhanced, and when the barium sulfate content in the negative active material is 1.2 mass% or more, the effect of suppressing permeation short circuit is remarkably enhanced (FIG. 5).

Table 3 shows that when the barium sulfate content in the negative active material is 3.0 mass% or less, deterioration of regenerative charge acceptability can be suppressed. When 4.0 mass% of barium sulfate was contained in the negative active material in the case where the negative active material contained 1.5 mass% or more of graphite, the active material paste was excessively hard, and thus difficult to pack in a grid.

**[Table 5]**

| Samples | Scaly graphite (mass%) | Barium sulfate (mass%) | Density of negative active material (g/cm³) | Base thickness of separator (mm) | Antimony (mass%) | Regenerative charge acceptability (A1 ratio) | PSOC lifetime (A1 ratio) | Permeation short circuit occurrence ratio (%) |
|---|---|---|---|---|---|---|---|---|
| C1 | 1.5 | 1.5 | 3.4 | 0.25 | 0.04 | 88 | 125 | 0 |
| C2 | 1.5 | 1.5 | 3.6 | 0.25 | 0.04 | 92 | 139 | 0 |
| A19 | 1.5 | 1.5 | 3.8 | 0.25 | 0.04 | 93 | 132 | 20 |
| C3 | 1.5 | 1.5 | 4.0 | 0.25 | 0.04 | 96 | 136 | 20 |
| C4 | 1.5 | 1.5 | 4.1 | 0.25 | 0.04 | 97 | 129 | 40 |
| C5 | 1.5 | 0.6 | 3.6 | 0.25 | 0.04 | 96 | 124 | 40 |
| A16 | 1.5 | 0.6 | 3.8 | 0.25 | 0.04 | 98 | 119 | 60 |
| C6 | 2.0 | 3.0 | 3.4 | 0.25 | 0.04 | 85 | 123 | 0 |
| A28 | 2.0 | 3.0 | 3.8 | 0.25 | 0.04 | 91 | 127 | 0 |
| C7 | 2.0 | 3.0 | 4.0 | 0.25 | 0.04 | 93 | 125 | 20 |

Samples C5 and A16 in Table 5 and Fig. 6 represent comparative examples which are not part of the invention.

Table 5 and FIG. 6 show results when the density of the negative active material is changed. Table 5 and FIG. 6 show that when the density of the negative active material is 4.0 g/cm³ or less, permeation short circuit can be suppressed. It has not been known heretofore that the density of the negative active material is associated with permeation short circuit. Therefore, suppression of permeation short circuit by setting the density of the negative active material to 4.0 g/cm³ or less was an unexpected result. When the density of the negative active material is 3.8 g/cm³ or less, the permeation short circuit suppressing effect is further enhanced.

Table 5 and FIG. 6 show that when the density of the negative active material is increased, regenerative charge acceptability is improved. When the density of the negative electrode material is 3.6 g/cm³ or more, regenerative charge acceptability is considerably improved, and when the density of the negative active material is 3.7 g/cm³ or more, regenerative charge acceptability is remarkably improved.

**[Table 6]**

| Samples | Scaly graphite (mass%) | Barium sulfate (mass%) | Antimony (mass%) | Base thickness of separator (mm) | Density of negative active material (g/cm³) | Carbon black (mass%) | Regenerative charge acceptability (A1 ratio) | PSOC lifetime (A1 ratio) | Permeation short circuit occurrence ratio (%) |
|---|---|---|---|---|---|---|---|---|---|
| A1 | 0 | 0.6 | 0.04 | 0.25 | 3.8 | 0 | 100 | 100 | 20 |
| D1 | 0 | 0.6 | 0.04 | 0.25 | 3.8 | 0.10 | 100 | 102 | 20 |
| A19 | 1.5 | 1.5 | 0.04 | 0.25 | 3.8 | 0 | 93 | 132 | 20 |
| D2 | 1.5 | 1.5 | 0.04 | 0.25 | 3.8 | 0.05 | 95 | 134 | 20 |
| D3 | 1.5 | 1.5 | 0.04 | 0.25 | 3.8 | 0.10 | 95 | 137 | 0 |
| D4 | 1.5 | 1.5 | 0.04 | 0.25 | 3.8 | 0.50 | 96 | 139 | 0 |
| D5 | 1.5 | 1.5 | 0.04 | 0.25 | 3.8 | 1.00 | 98 | 143 | 0 |
| D6* | 1.5 | 1.5 | 0.04 | 0.25 | 3.8 | 1.20 | - | - | - |
| A27 | 2.0 | 2.0 | 0.04 | 0.25 | 3.8 | 0 | 92 | 124 | 20 |
| D7 | 2.0 | 2.0 | 0.04 | 0.25 | 3.8 | 0.05 | 94 | 128 | 20 |
| D8 | 2.0 | 2.0 | 0.04 | 0.25 | 3.8 | 0.10 | 95 | 131 | 0 |

| | | | | | | | | | |
|---|---|---|---|---|---|---|---|---|---|
| * Preparation was impossible because the paste was excessively hard. Samples A1 and D1 in Table 6 and FIG. 7 represent comparative examples which are not part of the invention. | | | | | | | | | |

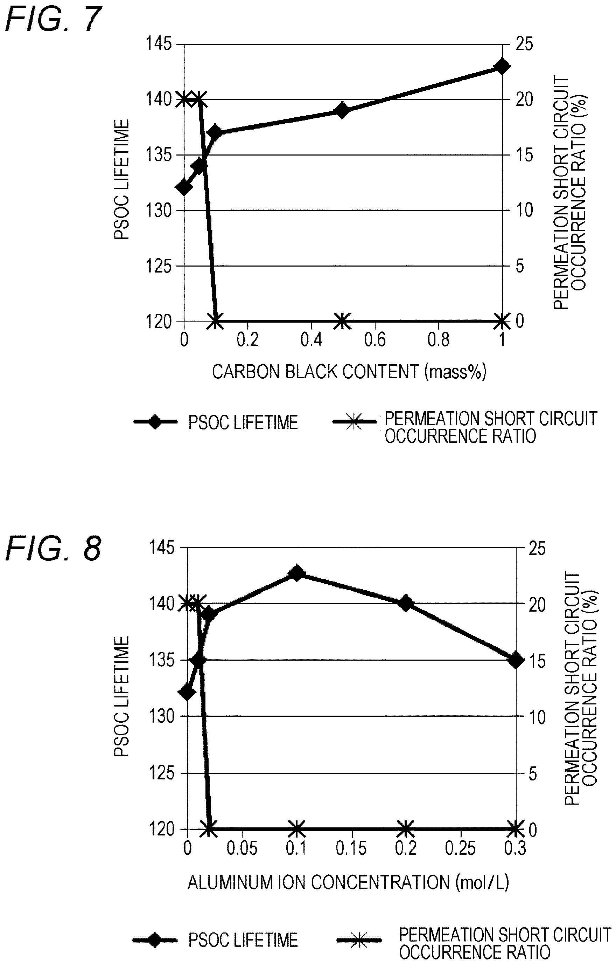

Table 6 and FIG. 7 show results when the negative active material contains carbon black. Table 6 and FIG. 7 show that when the negative active material contains carbon black, permeation short circuit can be suppressed. It has not been known heretofore that permeation short circuit can be suppressed by containing carbon black in the negative active material, and this was an unexpected result. The effect of suppressing permeation short circuit by carbon black is remarkably observed when the carbon black content in the negative active material is 0.1 mass% or more. When the negative active material contains 1.2 mass% or more of carbon black, the negative active material paste is excessively hard, and thus difficult to pack, the carbon black content in the negative active material is preferably 1.0 mass% or less.

When the negative active material does not contain graphite, the permeation short circuit suppressing effect is not obtained even when the negative active material contains carbon black (samples A1 and D1 in Table 6). Thus, it is apparent that the effect of suppressing permeation short circuit by carbon black is high when the negative active material contains graphite. It has not been known heretofore that graphite and carbon black in the negative active material are associated with permeation short circuit. Therefore, it is not predictable that the effect of suppressing permeation short circuit by carbon black in the negative active material is enhanced when the negative active material contains graphite.

**[Table 7]**

| Samples | Scaly graphite (mass%) | Barium sulfate (mass%) | Antimony (mass%) | Base thickness of separator (mm) | Density of negative active material (g/cm³) | Al in electrolyte solution (mol/L) | Regenerative charge acceptability (A1 ratio) | PSOC lifetime (A1 ratio) | Permeation short circuit occurrence ratio (%) |
|---|---|---|---|---|---|---|---|---|---|
| A19 | 1.5 | 1.5 | 0.04 | 0.25 | 3.8 | 0 | 93 | 132 | 20 |
| D9 | 1.5 | 1.5 | 0.04 | 0.25 | 3.8 | 0.01 | 94 | 135 | 20 |
| D10 | 1.5 | 1.5 | 0.04 | 0.25 | 3.8 | 0.02 | 95 | 139 | 0 |
| D11 | 1.5 | 1.5 | 0.04 | 0.25 | 3.8 | 0.10 | 94 | 143 | 0 |
| D12 | 1.5 | 1.5 | 0.04 | 0.25 | 3.8 | 0.20 | 91 | 140 | 0 |
| D13 | 1.5 | 1.5 | 0.04 | 0.25 | 3.8 | 0.30 | 90 | 135 | 0 |

Table 7 and FIG. 8 show results when the negative active material contains aluminum ions. Table 7 and FIG. 8 show that when the electrolyte solution contains aluminum ions, permeation short circuit can be suppressed. The effect of suppressing permeation short circuit by aluminum ions is remarkably observed when the aluminum ion concentration in the electrolyte solution is 0.02 mass% or more.

When the electrolyte solution contains 0.01 mol/L or more of aluminum ions, the PSOC lifetime is considerably improved, and when the electrolyte solution contains 0.1 mol/L or more of aluminum ions, the PSOC lifetime is remarkably improved. When the electrolyte solution contains 0.25 mol/L or less of aluminum ions, the PSOC lifetime is considerably improved, and when the electrolyte solution contains 0.2 mol/L or less of aluminum ions, the PSOC lifetime is remarkably improved.

**[Table 8]**

| Samples | Scaly graphite (mass%) | Barium sulfate (mass%) | Antimony (mass%) | Base thickness of separator (mm) | Density of negative active material (g/cm³) | Regenerative charge acceptability (E1 ratio) | PSOC lifetime (E1 ratio) | Permeation short circuit occurrence ratio (%) |
|---|---|---|---|---|---|---|---|---|
| E1 | 0.0 | 0.6 | 0.04 | 0.2 | 3.6 | 100 | 100 | 20 |
| E2 | 1.5 | 0.6 | 0.04 | 0.2 | 3.6 | 97 | 118 | 40 |
| E3 | 1.5 | 1.2 | 0.04 | 0.2 | 3.6 | 95 | 129 | 20 |
| E4 | 1.5 | 3.0 | 0.04 | 0.2 | 3.6 | 90 | 135 | 0 |
| E5 | 2.0 | 0.6 | 0.04 | 0.2 | 3.6 | 97 | 113 | 60 |
| E6 | 2.0 | 1.2 | 0.04 | 0.2 | 3.6 | 94 | 125 | 20 |
| E7 | 2.0 | 3.0 | 0.04 | 0.2 | 3.6 | 91 | 133 | 0 |

Table 8 shows results when the base thickness of the separator is 0.2 mm, and the density of the negative active material was 3.6 g/cm³. Here, the negative active material does not contain carbon black, and aluminum ions are not added to the electrolyte solution. Except for the permeation short circuit occurrence ratio, data are shown as values relative to sample E1 where the value for sample E1 is 100%. It is apparent that even when the thickness of the base in the separator is changed, a lead-acid battery having reduced permeation short circuit as in the case of samples in Table 3 is obtained. Samples E1, E2, and E5 represent comparative examples which are not part of the invention.

In the example, a flooded-type lead-acid battery having reduced permeation short circuit is obtained, and a valve regulated lead-acid battery may be prepared with a glass mat or the like used as a separator.

## Claims

1. A lead-acid battery comprising:
a negative electrode plate;
a positive electrode plate; and
an electrolyte solution,
wherein the negative electrode plate includes a negative electrode material as negative active material containing graphite or carbon fiber,
wherein the positive electrode plate includes a positive electrode material as positive active material containing 0.01 to 0.10 mass% of antimony, and
wherein the negative electrode material contains 0.70 mass% to 1.75 mass% of the barium element.

2. The lead-acid battery according to claim 1, wherein the negative electrode material contains carbon black.

3. The lead-acid battery according to claim 1 or 2, wherein a density of the negative electrode material is 4.0 g/cm³ or less, wherein the density is determined as described in part <positive electrode plate> of the specification.

4. The lead-acid battery according to any one of claims 1 to 3, wherein the negative electrode material contains 2.4 mass% or less of graphite or carbon fiber.

5. The lead-acid battery according to any one of claims 1 to 4, wherein a density of the negative electrode material is 3.6 g/cm³ or more, wherein the density is determined as described in part <positive electrode plate> of the specification.

6. The lead-acid battery according to any one of claims 1 to 5, wherein the electrolyte solution contains aluminum ions.

7. The lead-acid battery according to claim 2, wherein the negative electrode material contains 0.10 mass% or more of carbon black.

8. The lead-acid battery according to any one of claims 1 to 7, wherein the negative electrode material contains the barium element in the form of barium sulfate.

9. The lead-acid battery according to any one of claims 1 or 8, wherein the lead-acid battery is a lead-acid battery for idling-stop vehicles.

## Patentansprüche

1. Blei-Säure-Batterie, umfassend:
eine negative Elektrodenplatte;
eine positive Elektrodenplatte; und
eine Elektrolytlösung,
wobei die negative Elektrodenplatte ein negatives Elektrodenmaterial als negatives aktives Material enthaltend Graphit oder Kohlenstofffaser umfasst,
wobei die positive Elektrodenplatte ein positives Elektrodenmaterial als positives aktives Material enthaltend 0,01 bis 0,10 Massen% Antimon umfasst, und
wobei das negative Elektrodenmaterial 0,70 Massen% bis 1,75 Massen% des Barium-Elements enthält.

2. Blei-Säure-Batterie nach Anspruch 1, wobei das negative Elektrodenmaterial Ruß enthält.

3. Blei-Säure-Batterie nach Anspruch 1 oder 2, wobei eine Dichte des negativen Elektrodenmaterials 4,0 g/cm³ oder weniger ist, wobei die Dichte wie im Teil < Positive Elektrodenplatte> der Beschreibung bestimmt wird.

4. Blei-Säure-Batterie nach einem der Ansprüche 1 bis 3, wobei das negative Elektrodenmaterial 2,4 Massen% oder weniger von Graphit oder Kohlenstofffaser enthält.

5. Blei-Säure-Batterie nach einem der Ansprüche 1 bis 4, wobei eine Dichte des negativen Elektrodenmaterials 3,6 g/cm³ oder mehr ist, wobei die Dichte wie im Teil < Positive Elektrodenplatte> der Beschreibung bestimmt wird.

6. Blei-Säure-Batterie nach einem der Ansprüche 1 bis 5, wobei die Elektrolytlösung Aluminiumionen enthält.

7. Blei-Säure-Batterie nach Anspruch 2, wobei das negative Elektrodenmaterial 0,10 Massen% oder mehr Ruß enthält.

8. Blei-Säure-Batterie nach einem der Ansprüche 1 bis 7, wobei das negative Elektrodenmaterial das Barium-Element in der Form von Bariumsulfat enthält.

9. Blei-Säure-Batterie nach einem der Ansprüche 1 bis 8, wobei die Blei-Säure-Batterie eine Blei-Säure-Batterie für ein Fahrzeug mit Idle-Stopp-System ("idling-stop-vehicle") ist.

## Revendications

1. Batterie au plomb-acide comprenant :
une électrode plane négative ;
une électrode plane positive ;
et une solution électrolytique,
dans laquelle l'électrode plane négative comporte une matière d'électrode négative en tant que matière active négative contenant du graphite ou des fibres de carbone,
dans laquelle l'électrode plane positive comporte une matière d'électrode positive en tant que matière active positive contenant de 0,01 à 0,10 % en masse d'antimoine, et
dans laquelle la matière d'électrode négative contient de 0,70 % en masse à 1,75 % en masse de l'élément baryum.

2. Batterie au plomb-acide selon la revendication 1, dans laquelle la matière d'électrode négative contient du noir de carbone.

3. Batterie au plomb-acide selon la revendication 1 ou 2, dans laquelle une densité de la matière d'électrode négative est inférieure ou égale à 4,0 g/cm³, dans laquelle la densité est déterminée comme décrit dans la partie *<Positive Electrode Plate>* de la spécification.

4. Batterie au plomb-acide selon l'une quelconque des revendications 1 à 3, dans laquelle la matière d'électrode négative contient au plus 2,4 % en masse de graphite ou de fibres de carbone.

5. Batterie au plomb-acide selon l'une quelconque des revendications 1 à 4, dans laquelle une densité de la matière d'électrode négative est supérieure ou égale à 3,6 g/cm³, dans laquelle la densité est déterminée comme décrit dans la partie *<Positive Electrode Plate>* de la spécification.

6. Batterie au plomb-acide selon l'une quelconque des revendications 1 à 5, dans laquelle la solution électrolytique contient des ions aluminium.

7. Batterie au plomb-acide selon la revendication 2, dans laquelle la matière d'électrode négative contient au moins 0,10 % en masse de noir de carbone.

8. Batterie au plomb-acide selon l'une quelconque des revendications 1 à 7, dans laquelle la matière d'électrode négative contient l'élément baryum sous la forme de sulfate de baryum.

9. Batterie au plomb-acide selon l'une quelconque des revendications 1 et 8, dans laquelle la batterie au plomb-acide est une batterie au plomb-acide destinée à des véhicules dotés de la fonction de mise en veille.
